# EUROPÄISCHE PATENTSCHRIFT

(11) **EP 1 390 642 B1**
(45) Veröffentlichungstag und Bekanntmachung des Hinweises auf die Patenterteilung: **12.01.2005**
(21) Anmeldenummer: 02727490.1
(22) Anmeldetag: 27.03.2002
(51) Int. Cl.: F16H 3/66

(54) **MEHRSTUFENGETRIEBE**
MULTI-STAGE TRANSMISSION
BOITE DE VITESSES A PLUSIEURS ETAGES

(30) Priorität: 30.03.2001 DE 10115987
(43) Veröffentlichungstag der Anmeldung: 25.02.2004
(73) Patentinhaber: ZF FRIEDRICHSHAFEN AG, 88038 Friedrichshafen (DE)
(72) Erfinder: ZIEMER, Peter, 88069 Tettnang (DE)
(86) Internationale Anmeldenummer: PCT/EP2002/003436
(87) Internationale Veröffentlichungsnummer: WO 2002/079671

(56) Entgegenhaltungen:
- US-A- 4 395 925
- US-A- 5 106 352
- US-A- 5 358 458

## Beschreibung

Die vorliegende Erfindung betrifft ein Mehrstufengetriebe nach dem Oberbegriff des Hauptanspruches, welches acht Vorwärtsgänge schalten kann.

Ein derartiges Getriebe geht aus der EP 0 434 525 als bekannt hervor. Dieses Getriebe umfasst im wesentlichen eine Antriebswelle und eine Abtriebswelle, die koaxial zueinander angeordnet sind, einen konzentrisch zur Abtriebswelle angeordneten Doppelplanetenradsatz und fünf Schaltelemente in der Form von drei Kupplungen und zwei Bremsen, deren wahlweise, jeweils paarweise Betätigung die verschiedenen Gangübersetzungen zwischen der Antriebswelle und der Abtriebswelle bestimmen.

Das bekannte Getriebe weist zwei Leistungswege auf, wobei ein erstes Element des Doppelplanetenradsatzes durch eine erste Kupplung mit dem ersten Leistungsweg verbunden ist, ein zweites Element des Doppelplanetenradsatzes mit der Abtriebswelle fest verbunden ist, ein drittes Element mit dem zweiten Leistungsweg über eine dritte Kupplung verbunden ist und durch eine erste Bremse gesperrt wird und ein viertes Element des Doppelplanetenradsatzes mit dem ersten Leistungsweg über eine zweite Kupplung verbunden ist und durch eine zweite Bremse gebremst wird, sodass eine wahlweise Schaltung paarweise zwischen den Schaltorganen so gewährleistet ist, dass sechs Vorwärtsgänge entstehen. Dabei wird ein erster Gang durch die erste Kupplung und die erste Bremse, ein zweiter Gang durch die erste Kupplung und die zweite Bremse, ein dritter Gang durch die erste Kupplung und die zweite Kupplung, ein vierter Gang durch die erste Kupplung und die dritte Kupplung, ein fünfter Gang durch die zweite Kupplung und die dritte Kupplung und ein sechster Gang durch die dritte Kupplung und die zweite Bremse geschaltet. Schließlich wird ein Rückwärtsgang durch die zweite Kupplung und die erste Bremse geschaltet.

Die der Erfindung zugrunde liegende Aufgabe besteht nun darin, ein Mehrstufengetriebe zu schaffen, das acht Vorwärtsgänge schalten kann und gleichzeitig eine günstige Gangstufung sowie eine große Spreizung umfasst.

Diese Aufgabe wird durch ein Mehrstufengetriebe gelöst, dass neben den Merkmalen des Oberbegriffs auch die Merkmale des kennzeichnenden Teils des Hauptanspruches aufweist.

Das erfindungsgemäße Getriebe besteht im wesentlichen aus einer Antriebswelle, einer Abtriebswelle und drei Planetenradsätzen, wobei ein Planetenradsatz nicht schaltbar und zwei weitere Planetenradsätze schaltbar sind. Der erste Planetenradsatz bildet einen Vorschaltradsatz und die beiden schaltbaren Planetenradsätze bilden zusammen einen Nachschaltradsatz in Form eines Zweisteg-Vierwellen-Getriebes.

Das Getriebe besitzt zwei Leistungswege. Im ersten Leistungsweg wird die Eingangsdrehzahl über den ersten Planetenradsatz mit einem festen Übersetzungsverhältnis in eine zweite Drehzahl übersetzt. Im zweiten Leistungsweg wird die Eingangsdrehzahl direkt in die beiden Planetenradsätze des Nachschaltradsatzes eingeleitet.

Der Nachschaltradsatz besteht aus zwei Planetenradsätzen welche sich wiederum aus 4 Wellen zusammensetzen, wobei die erste Welle über eine erste Kupplung mit dem ersten Leistungsweg verbunden ist, die zweite Welle über eine zweite Kupplung mit dem ersten Leistungsweg und über eine dritte Kupplung mit dem zweiten Leistungsweg verbunden ist sowie über eine erste Bremse arretiert wird, die dritte Welle über eine vierte Kupplung mit dem zweiten Leistungsweg verbunden ist und über eine zweite Bremse arretiert wird und die vierte Welle fest mit der Abtriebswelle verbunden ist. Dabei wird ein erster Gang durch die erste Kupplung und die zweite Bremse, ein zweiter Gang durch die erste Kupplung und die erste Bremse, ein dritter Gang durch die erste und die zweite Kupplung, ein vierter Gang durch die erste und die dritte Kupplung, ein fünfter Gang durch die erste und die vierte Kupplung, ein sechster Gang durch die dritte und die vierte Kupplung, ein siebter Gang durch die zweite und die vierte Kupplung und ein achter Gang durch die vierte Kupplung und die erste Bremse, der erste Rückwärtsgang durch die zweite Kupplung und die zweite Bremse sowie ein zweiter Rückwärtsgang durch die dritte Kupplung und die zweite Bremse geschaltet.

Ein wesentlicher Vorteil besteht darin, dass das erfindungsgemäße Mehrstufengetriebe bei einer geringen Anzahl von Radsätzen und Schaltelementen acht Vorwärtsgänge aufweist. Dabei sind in jedem geschalteten Gang jeweils nur zwei Schaltelemente geschaltet. Beim Umschalten von einem Gang in den nächsten wird lediglich ein Schaltelement abgeschaltet und ein weiteres Schaltelement zugeschaltet. Auf diese Weise können Gruppenschaltungen, bei denen mehrere Schaltelemente gleichzeitig geschaltet werden müssen und die für die Schaltqualität kritisch sein können, vermieden werden.

Für die Drehzahlen an den Wellen und Schaltelementen gilt folgendes:
1. Die Drehzahl an der Antriebswelle und an den Schaltelementen E und B ist n = "eins" (als normierte Größe);
2. Die Drehzahl an den Schaltelementen A und F ist gleich und liegt im Bereich von größer "null" und kleiner "eins";
3. Die Drehzahl an den Schaltelementen C und D ist gleich "null";

Aus den Unteransprüchen gehen bevorzugte Ausgestaltungen der Erfindung hervor, die kostengünstig herstellbare Mehrstufengetriebe betreffen. Bei diesen werden mit einer möglichst kleinen Anzahl von Schaltelementen und Radsätzen möglichst viele Gänge geschaltet.

Im folgenden werden die Erfindung und deren Ausgestaltungen im Zusammenhang mit den Figuren näher erläutert. Es zeigen:
Fig. 1 ein Getriebeschema einer ersten Ausgestaltung eines Mehrstufengetriebes mit acht Vorwärtsgängen und zwei Rückwärtsgängen,
Fig. 2 ein Getriebeschema einer weiteren Ausgestaltung eines Mehrstufengetriebes mit acht Vorwärtsgängen und zwei Rückwärtsgängen,
Fig. 3 eine Tabelle mit der Schaltlogik zu Fig. 1 und Fig. 2 mit den beispielhaften Übersetzungen der einzelnen Gänge, der Getriebespreizung und der Standübersetzung der einzelnen Planetenradsätzen,
Fig. 4 ein Getriebeschema einer weiteren Ausgestaltung eines Mehrstufengetriebes mit acht Vorwärtsgängen und zwei Rückwärtsgängen,
Fig. 5 eine Tabelle mit der Schaltlogik zu Fig. 4 mit den beispielhaften Übersetzungen der einzelnen Gänge, der Getriebespreizung und der Standübersetzung der einzelnen Planetenradsätzen.

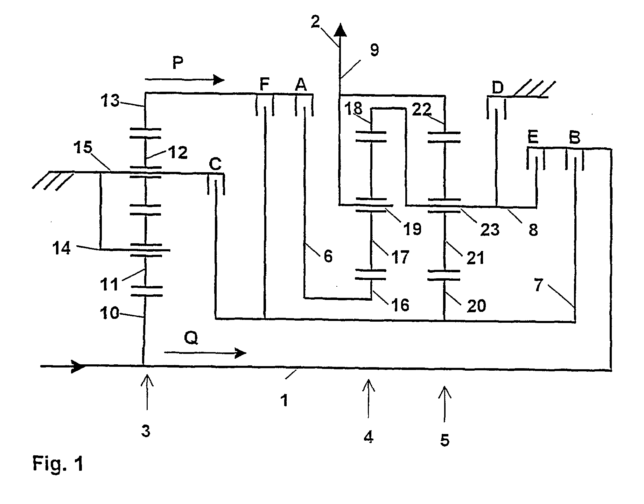

Die Fig. 1 stellt schematisch ein erstes Ausführungsbeispiel der erfindungsgemäßen Lösung dar. Ein erster Planetenradsatz 3 ist über ein Sonnenrad 10 mit einer Antriebswelle 1 fest verbunden. Der Planetenradsatz 3 besitzt innere und äußere Planetenräder 11, 12. Die inneren Planetenräder 11 werden von einem Steg 14 getragen und greifen in das Sonnenrad 10 und in die äußeren Planetenräder 12 ein. Die äußeren Planetenräder 12 werden von einem Steg 15 getragen und greifen in die inneren Planetenräder 11 sowie in ein Hohlrad 13 ein, welches mit einer ersten und einer zweiten Kupplung A, F verbunden ist. Außerdem sind die beiden Stege 14, 15 sowie eine erste Bremse C fest miteinander gekoppelt und mit dem Gehäuse fest verbunden. Der erste Planetenradsatz 3 besitzt ein festes Übersetzungsverhältnis, welches größer null ist.

Der Nachschaltradsatz besteht aus zwei einfachen Planetenradsätzen 4, 5. Zum Planetenradsatz 4 gehören dabei Planetenräder 17, die von einem Steg 19 getragen werden und mit einem Sonnenrad 16 sowie einem Hohlrad 18 kämmen. Zum Planetenradsatz 5 gehören Planetenräder 21, die von einem Steg 23 getragen werden und mit einem Sonnenrad 20 und einem Hohlrad 22 kämmen. Das Hohlrad 18 des zweiten Planetenradsatzes 4 ist dabei mit dem Steg 23 des dritten Planetenradsatz 5 fest verbunden.

Eine erste Welle 6 des Nachschaltradsatzes umfaßt das Sonnenrad 16 des zweiten Planetenradsatzes 4 ist mit der ersten Kupplung A verbunden. Eine zweite Welle 7 besteht aus dem Sonnenrad 20 des dritten Planetenradsatzes 5, welches mit der zweiten Kupplung F, der dritten Kupplung B und der ersten Bremse C verbunden ist. Eine dritte Welle 8 ist eine Koppelwelle und besteht aus dem Hohlrad 18 des zweiten Planetenradsatzes 4 und dem Steg 23 des dritten Planetenradsatzes 5 und ist mit der vierten Kupplung E sowie der zweiten Bremse D verbunden. Eine vierte Welle 9 ist ebenfalls eine Koppelwelle und besteht aus dem Hohlrad 22 des dritten Planetenradsatzes 5 und dem Steg 19 des zweiten Planetenradsatzes 4 und ist mit der Abtriebswelle 2 fest verbunden.

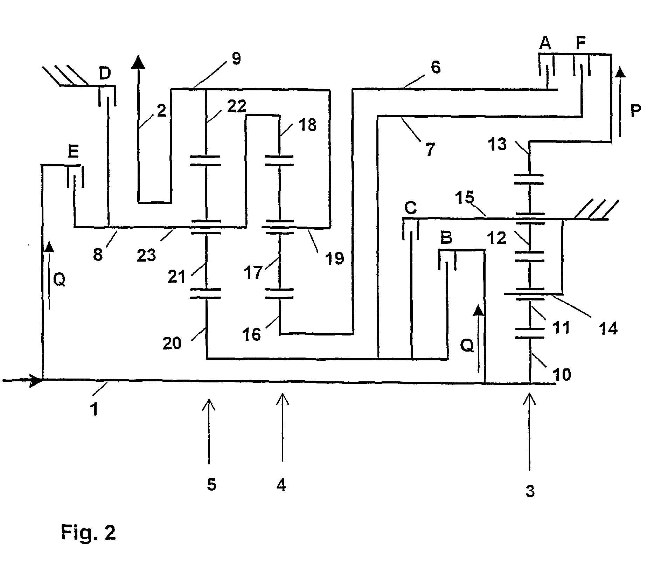

In Fig. 2 ist eine Variante des ersten Ausführungsbeispieles dargestellt, wobei im Gegensatz zur Fig. 1 die Kupplung B zwischen der Bremse C und dem Vorschaltradsatz angeordnet ist. Alle den Figuren 1 und 2 gemeinsamen oder die gleichen Funktionen ausübenden Elemente tragen die gleichen Bezugszeichen. Diese Anordnung kann hinsichtlich der Ölversorgung der Kupplung B und dem gesamten Raumbedarf des Getriebes Vorteile im Vergleich zum ersten Ausführungsbeispiel ergeben. Selbstverständlich kann die Kupplung E beispielsweise unter die Bremse D oder auch zwischen die Bremse D und dem dritten Planetenradsatz 5 angeordnet werden, wie auch das Kupplungspaket A und F über die Kupplung B und die Bremse C oder zwischen die Kupplung B und die Bremse C und dem zweiten Planetenradsatz 4 angeordnet werden kann.

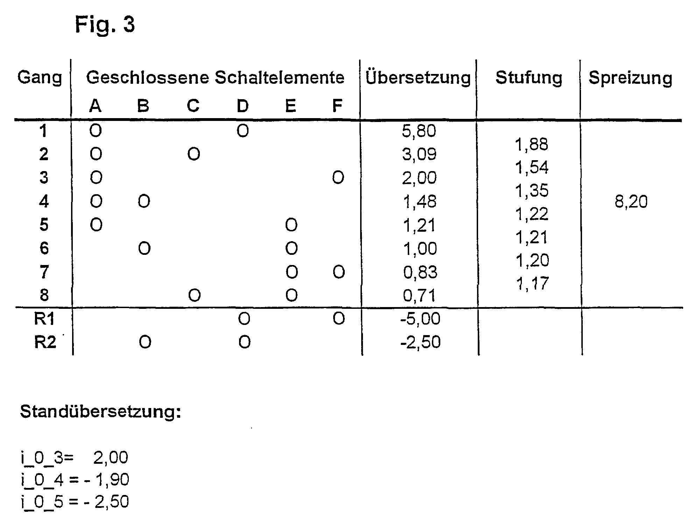

Fig. 3 stellt die zu den ersten beiden Ausführungsbeispielen gehörende Schaltlogik sowie beispielhafte Übersetzungen der einzelnen Gänge, Gangstufung, Getriebespreizung und Standübersetzungen der einzelnen Planetenradsätze dar.

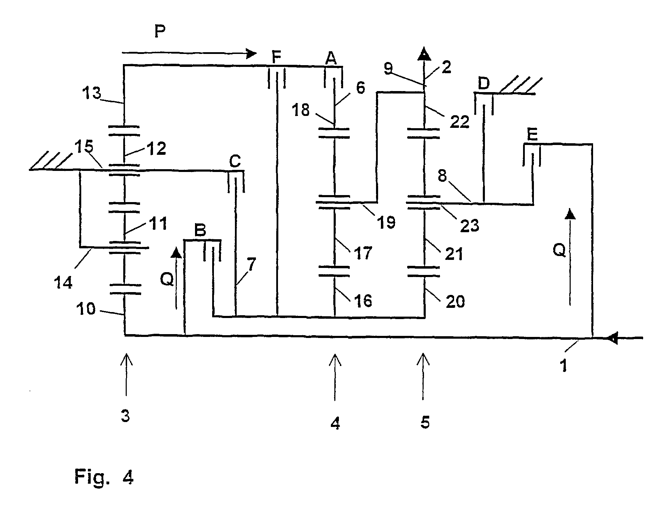

In Fig. 4 ist ein weiteres Ausführungsbeispiel eines erfindungsgemäßen Getriebes dargestellt. Der Vorschaltradsatz entspricht dem erstem Planetenradsatz 3 aus der Fig. 1. Der Planetenradsatz 3 ist über ein Sonnenrad 10 mit der Antriebswelle 1 fest verbunden. Der Planetenradsatz 3 besitzt innere und äußere Planetenräder 11, 12. Die inneren Planetenräder 11 werden von einem Steg 14 getragen und greifen in die äußeren Planetenräder 12 und in das Sonnenrad 10 ein. Die äußeren Planetenräder 12 werden von einem Steg 15 getragen und greifen in die inneren Planetenräder 11 sowie in ein Hohlrad 13 ein, welches mit der ersten und der zweiten Kupplung A, F verbunden ist. Außerdem sind die beiden Stege 14, 15 sowie eine erste Bremse C fest miteinander gekoppelt und mit dem Gehäuse fest verbunden. Über den Planetenradsatz 3 und die ersten beiden Kupplungen A,F kann der erste Leistungsweg P mit dem Nachschaltradsatz verbunden werden.

Der Nachschaltradsatz besteht aus zwei einfachen Planetenradsätzen 4, 5. Zum Planetenradsatz 4 gehören dabei Planetenräder 17, die von einem Steg 19 getragen werden und mit einem Sonnenrad 16 sowie einem Hohlrad 18 kämmen. Zum Planetenradsatz 5 gehören die Planetenräder 21, die von einen Steg 23 getragen werden und die mit einem Sonnenrad 20 und einem Hohlrad 22 kämmen. Die Sonnenräder 16 und 20 sind fest miteinander verbunden, wie auch der Steg 19 mit dem Hohlrad 22 fest miteinander verbunden ist.

Eine erste Welle 6 des Nachschaltradsatzes besteht aus dem Hohlrad 18 des zweiten Planetenradsatzes 4 und ist mit einer ersten Kupplung A verbunden. Eine zweite Welle 7 besteht aus der Koppelwelle zwischen den Sonnenrädern 16 und 20 und ist mit der zweiten und dritten Kupplung F, B sowie einer ersten Bremse C verbunden. Eine dritte Welle 8 besteht aus dem Steg 23 des dritten Planetenradsatzes 5 und ist mit der vierten Kupplung E verbunden. Eine vierte Welle 9 besteht aus der Koppelwelle zwischen dem Steg 19 des zweiten Planetenradsatzes 4 und dem Hohlrad 22 des dritten Planetenradsatzes 5 und ist mit der Abtriebswelle 2 fest verbunden.

Der Vorteil des dritten erfindungsgemäßen Ausführungsbeispieles im Vergleich mit den ersten beiden ist,.dass die Sonnenräder 16 und 20 nebeneinander auf der Welle 2 liegen. Damit können die beiden Sonnenräder 16, 20 vorteilhafterweise in einem Arbeitsgang gefertigt werden, was den Kostenaufwand für die Fertigung verringern kann. Außerdem können die Sonnenräder 16,20 in diesem Ausführungsbeispiel enger aneinander angeordnet werden als bei getrennter Bauweise, was Bauraum spart. Zudem können die beiden Planetenradsätze 4, 5 mit den selben Übersetzungsverhältnissen gefertigt werden, was weitere Fertigungskosten sparen kann.

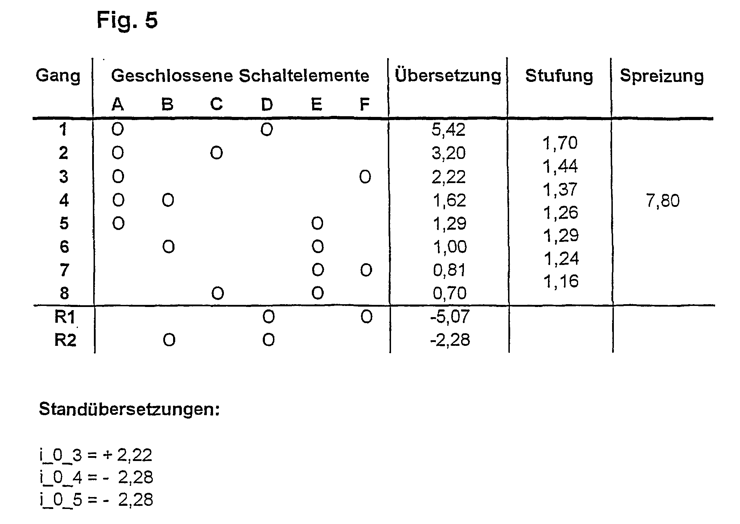

Fig. 5 stellt die zum dritten Ausführungsbeispiel gehörende Schaltlogik sowie beispielhafte Übersetzungen der einzelnen Gänge, Gangstufung, Getriebespreizung und Standübersetzungen der einzelnen Planetenradsätze dar.

In allen drei Ausführungsbeispielen Fig. 1, 2, 4 wird der erste Gang durch die erste Kupplung A und die zweite Bremse D, der zweite Gang durch die erste Kupplung A und die erste Bremse C, der dritte Gang durch die erste Kupplung A und die zweite Kupplung F, der vierte Gang durch die erste Kupplung A und die dritte Kupplung B, der fünfte Gang durch die erste Kupplung A und die vierte Kupplung E, der sechste Gang durch die dritte Kupplung B und die vierte Kupplung E, der siebte Gang durch die vierte Kupplung E und die zweite Kupplung F, der achte Gang durch die erste Bremse C und die vierte Kupplung E, der erste Rückwärtsgang durch die zweite Bremse D und die zweite Kupplung F und der zweite Rückwärtsgang durch die dritte Kupplung B und die zweite Bremse D geschaltet.

Zudem ist es in allen drei erfindungsgemäßen Ausführungsbeispielen möglich mit nur sechs Schaltelementen acht Vorwärts- und zwei Rückwärtsgänge zu schalten. Im Vergleich dazu werden im erwähnten Stand der Technik mit fünf Schaltelementen maximal sechs Vorwärtsgänge geschaltet. Es werden also mit nur einem zusätzlichen Schaltelement zwei Vorwärtsgänge mehr erreicht. Das bedeutet, dass mit geringem baulichen Aufwand ein großer Zuwachs an schaltbaren Gängen ermöglicht wird.

Die Drehzahleinleitung kann in den drei erfindungsgemäßen Ausführungsbeispielen jeweils auch von der entgegengesetzten Seite erfolgen.

### Bezugszeichen

- A: erste Kupplung
- B: dritte Kupplung
- C: erste Bremse
- D: zweite Bremse
- E: vierte Kupplung
- F: zweite Kupplung
- P: erster Leistungsweg
- Q: zweiter Leistungsweg
- 1: Antriebswelle
- 2: Abtriebswelle
- 3: erster Planetenradsatz
- 4: zweiter Planetenradsatz
- 5: dritter Planetenradsatz
- 6: erste Welle
- 7: zweite Welle
- 8: dritte Welle
- 9: vierte Welle
- 10: Sonnenrad
- 11: innere Planetenräder
- 12: äußere Planetenräder
- 13: Hohlrad
- 14: Steg
- 15: Steg
- 16: Sonnenrad
- 17: Planetenrad
- 18: Hohlrad
- 19: Steg
- 20: Sonnenrad
- 21: Planetenrad
- 22: Hohlrad
- 23: Steg

## Patentansprüche

1. Mehrstufengetriebe, bestehend aus einer Antriebswelle (1), einer Abtriebswelle (2), einem Vorschaltradsatz, der aus einem doppelten, nicht schaltbaren Planetenradsatz (3) besteht und einem Nachschaltradsatz, der aus zwei einfachen, schaltbaren Planetenradsätzen (4,5) besteht, sechs Schaltelementen (A bis F), welche mit den Planetenradsätzen (4, 5) und den dazugehörigen Wellen (6 bis 9) zwei Leistungswege (P, Q) bilden, **dadurch gekennzeichnet, dass** die Antriebswelle (1) mit der dritten und der vierten Kupplung (B, E) sowie dem Sonnenrad (10) verbunden ist, dass der Steg (14) die inneren Planetenräder (11) trägt, die mit dem Sonnenrad (10) und den äußeren Planetenräder (12) kämmen, dass der Steg (15) die äußeren Planetenräder (12) trägt, die mit den inneren Planetenräder (11) und dem Hohlrad (13) kämmen, dass das Hohlrad (13) mit einer ersten und einer zweiten Kupplung (A, F) fest verbunden ist, dass die beiden Stege (14, 15) miteinander gekoppelt und mit einer ersten Bremse (C) sowie dem Gehäuse fest verbunden sind, dass der erste Leistungsweg über den ersten Planetenradsatz (3) und die erste Kupplung (A) auf die ersten Welle (6) und über die zweite Kupplung (F) auf die zweite Welle (7) führt, dass der zweite Leistungsweg (Q) über die dritte Kupplung (B) auf die zweite Welle (7) führt und über die vierte Kupplung (E) auf die dritte Welle (8) führt, dass die erste Welle (6) über die Kupplung (A) mit dem Sonnenrad (16) verbindbar ist, dass der Steg (19) die Planetenräder (17) trägt, die mit dem Sonnenrad (16) und dem Hohlrad (18) kämmen, dass das Hohlrad (18) mit dem Steg (23) gekoppelt ist und die dritte Welle (8) bildet, dass die dritte Welle (8) mit der Kupplung (E) verbindbar und mit der Bremse (D) arretierbar ist, dass der Steg (23) die Planetenräder (21) trägt, die mit dem Sonnenrad (20) und dem Hohlrad (22) kämmen, dass das Sonnenrad (20) die zweite Welle (7) bildet, die mit der ersten Bremse (C) arretierbar ist, über die Kupplung (F) mit dem ersten Leistungsweg (P) und über die Kupplung (B) mit dem zweiten Leistungsweg (Q) verbindbar ist, dass der zweite Leistungsweg über die Kupplung (B) mit der zweiten Welle (7) und über die Kupplung (E) mit der dritten Welle (8) verbindbar ist, dass der Steg (19) mit dem Hohlrad (22) gekoppelt ist und die vierte Welle (9) bildet, die mit der Abtriebswelle (2) fest verbunden ist.

2. Mehrstufengetriebe nach Anspruch 1, **dadurch gekennzeichnet, dass** vom Antrieb aus gesehen zwischen dem Vorschaltradsatz und dem Nachschaltradsatz zuerst die Bremse (C), dann die Kupplung (F) und dann die Kupplung (A) angeordnet ist.

3. Mehrstufengetriebe nach Anspruch 1, **dadurch gekennzeichnet, dass** vom Antrieb aus gesehen zwischen dem Nachschaltradsatz und dem Gehäuse zuerst die Bremse (D), dann die Kupplung (E) und dann die Kupplung (B) angeordnet ist.

4. Mehrstufengetriebe nach Anspruch 1, **dadurch gekennzeichnet, dass** vom Antrieb aus gesehen zwischen dem Gehäuse und dem Nachschaltradsatz zuerst die Kupplung (E) und dann die Bremse (D) angeordnet ist.

5. Mehrstufengetriebe nach Anspruch 1, **dadurch gekennzeichnet, dass** vom Antrieb aus gesehen zwischen dem Nachschaltradsatz und dem Vorschaltradsatz zuerst die Kupplung (C), dann die Kupplung (B) und zwischen dem Vorschaltradsatz und dem Gehäuse zuerst die Kupplung (A) und dann die Kupplung (F) angeordnet ist.

6. Mehrstufengetriebe nach dem Oberbegriff des Anspruchs 1, **dadurch gekennzeichnet, dass** die Antriebswelle (1) mit der dritten und vierten Kupplung (B, E) und dem Sonnenrad (10) verbunden ist, dass der Steg (14) die inneren Planetenräder (11) trägt, die mit dem Sonnenrad (10) und den äußeren Planetenräder (12) kämmen, dass der Steg (15) die äusseren Planetenräder (12) trägt, die mit den inneren Planetenrädern (11) und dem Hohlrad (13) kämmen, dass das Hohlrad (13) mit einer ersten und einer zweiten Kupplung (A, F) fest verbunden ist, dass die beiden Stege (14, 15) miteinander gekoppelt und mit einer ersten Bremse (C) und mit dem Gehäuse fest verbunden sind, dass der erste Leistungsweg (P) über den ersten Planetenradsatz (3) und über die erste Kupplung (A)auf die erste Welle (6) und über die zweite Kupplung (F) auf die zweite Welle (7) führt, dass der zweite Leistungsweg (Q) von der Antriebswelle (1) über die dritte Kupplung (B) auf die zweite Welle (7) und über die vierte Kupplung (E) auf die dritte Welle (8) führt, dass die erste Welle (6) über die erste Kupplung (A) mit dem Hohlrad (18) verbindbar ist, dass der Steg (19) die Planetenräder (17) trägt, die mit dem Hohlrad (18) und dem Sonnenrad (16) kämmen, dass das Sonnenrad (16) mit dem Sonnenrad (20) gekoppelt ist und die zweite Welle (7) bildet, dass der Steg (19) mit dem Hohlrad (22) gekoppelt ist und die vierte Welle (9) bildet, welche mit der Abtriebswelle (2) fest verbunden ist, dass der Steg (23) die Planetenräder (21) trägt, welche mit dem Hohlrad (22) und dem Sonnenrad (20) kämmen, dass der Steg (23) über die zweite Bremse (D) arretierbar ist und die dritte Welle (8) bildet.

## Claims

1. The invention relates to a multistep reduction gear comprising a drive shaft (1), an output shaft (2), a front-mounted gear set, which consists of a double, non-shifting planetary gear set (3), a rear-mounted gear set, which consists of two single, shiftable planetary gear sets (4, 5), six control elements (A through F), which together with the planetary gear sets (4, 5) and the related shafts (6 to 9) form two power paths (P, Q), **characterized in that** the drive shaft (1) is linked to the third and the fourth dutch (B, E) as well as the sun gear (10), that the spider (14) supports the inner planetary gears (11), which mesh with the sun gear (10) and the other planetary gears (12), that the spider (15) supports the outer planetary gears (12), which mesh with the inner planetary gears (11) and the ring gear (13), that the ring gear (13) is firmly linked to a first and a second clutch (A, F), that the two spiders (14, 15) are linked to each other and that they are also firmly linked to a first brake (C) as well as the housing, that the first power path (P) via the first planetary gear set (3) and the first clutch (A) leads to the first shaft (6) and via the second dutch (F) to the second shaft (7), that the second power path (Q) via the third dutch (B) leads to the second shaft (7) and via the fourth clutch (E) to the third shaft (8), that the first shaft (6) can be linked to the sun gear (16) via the dutch (A), that the spider (19) supports the planetary gears (17), which mesh with the sun gear (16) and the ring gear (18), that the ring gear (18) is linked to the spider (23) and forms the third shaft (8), that the third shaft (8) can be linked to the clutch (E) and locked by the brake (D), that the spider (23) supports the planetary gears (21), which mesh with the sun gear (20) and the ring gear (22), that the sun gear (20) forms the second shaft (7), which can be locked by the first brake (C) and via the clutch (F) can be linked to the first power path (P) and via the clutch (B) to the second power path (Q), that the second power path via the dutch (B) can be linked to the second shaft (7) and via the dutch (E) to the third shaft (8), that the spider (19) is linked to the ring gear (22) and forms the fourth shaft (9), which is firmly linked to the output shaft (2).

2. A multistep reduction gear according to claim 1, **characterized in that**, viewed from the drive end, first the brake (C), then the clutch (F) and finally the clutch (A) is arranged between the front-mounted gear set and the rear-mounted gear set.

3. A multistep reduction gear according to claim 1, **characterized in that**, viewed from the drive end, first the brake (D), then the clutch (E) and finally the clutch (B) is arranged between the rear-mounted gear set and the housing.

4. A multistep reduction gear according to claim 1, **characterized in that**, viewed from the drive end, first the clutch (E) and then the brake (D) is arranged between the housing and the rear-mounted gear set.

5. A multistep reduction gear according to claim 1, **characterized in that**, viewed from the drive end, first the clutch (C) and then the clutch (B) is arranged between the rear-mounted gear set and the front-mounted gear set, and that first the clutch (A) and then the clutch (F) is arranged between the front-mounted gear set and the housing.

6. A multistep reduction gear according to the generic term of claim 1, **characterized in that** the drive shaft (1) is linked to the third and the fourth clutch (B, E) and to the sun gear (10), that the spider (14) supports the inner planetary gears (11), which mesh with the sun gear (10) and the outer planetary gears (12), that the spider (15) supports the outer planetary gears (12), which mesh with the inner planetary gears (11) and the ring gear (13), that the ring gear (13) is firmly linked to a first and a second clutch (A, F), that the two spiders (14, 15) are linked to each other and that they are firmly linked to a first brake (C) and the housing, that the first power path (P) via the first planetary gear set (3) and via the first dutch (A) leads to the first shaft (6) and via the second clutch (F) to the second shaft (7), that the second power path (Q) from the drive shaft (1) via the third clutch (B) leads to the second shaft (7) and via the fourth dutch (E) to the third shaft (8), that the first shaft (6) via the first clutch (A) can be linked to the ring gear (18), that the spider (19) supports the planetary gears (17), which mesh with the ring gear (18) and the sun gear (16), that the sun gear (16) is linked to the sun gear (20) and forms the second shaft (7), that the spider (19) is linked to the ring gear (22) and forms the fourth shaft (9), which is firmly linked to the output shaft (2), that the spider (23) supports the planetary gears (21), which mesh with the ring gear (22) and the sun gear (20), that the spider (23) can be locked via the second brake (D) and forms the third shaft (8).

## Revendications

1. Démultiplicateur à plusieurs étages, composé d'un arbre moteur (1), d'un arbre récepteur (2), d'un essieu monté en amont, composé d'un ensemble de pignons satellites (3) doubles, non embrayables et d'un essieu monté en aval, composé d'un ensemble de deux pignons satellites simples, embrayables (4, 5), de six éléments d'accouplement (A à F), formant avec les pignons satellites (4, 5) et les arbres correspondants (6 à 9) deux courses de travail (P, Q), **caractérisé en ce que** l'arbre moteur (1) est relié avec le troisième et le quatrième dispositif d'accouplement (B, E) ainsi qu'avec la roue solaire (10), **en ce que** la nervure (14) supporte les pignons satellites intérieurs (11), s'engrenant avec la roue solaire (10) et les pignons satellites extérieurs (12), **en ce que** la nervure (15) porte les pignons satellites extérieurs (12) s'engrenant avec les pignons satellites intérieurs (11) et la couronne de train planétaire (13), **en ce que** la couronne de train planétaire (13) est reliée de manière fixe avec un premier et un deuxième dispositif d'accouplement (A, F), **en ce que** les deux nervures (14, 15) sont couplées l'une à l'autre et sont reliées de manière fixe avec un premier frein (C) ainsi qu'avec le boîtier, **en ce que** la première course de travail conduit au premier arbre (6) par le premier ensemble de pignons satellites (3) et le premier dispositif d'accouplement (A) et au deuxième arbre (7) par le deuxième dispositif d'accouplement (F), **en ce que** la seconde course de travail (Q) conduit au deuxième arbre (7) par le troisième dispositif d'accouplement (B) et au troisième arbre (8) par le quatrième dispositif d'accouplement (E), **en ce que** le premier arbre (6) peut être relié à la roue solaire (16) par le dispositif d'accouplement (A), **en ce que** la nervure (19) porte les pignons satellites (17) s'engrenant avec la roue solaire (16) et la couronne de train planétaire (18), **en ce que** la couronne de train planétaire (18) est couplée à la nervure (23) et forme le troisième arbre (8), **en ce que** le troisième arbre (8) peut être relié avec le dispositif d'accouplement (E) et bloqué par le frein (D), **en ce que** la nervure (23) porte les pignons satellites (21) s'engrenant avec la roue solaire (20) et la couronne de train satellite (22), **en ce que** la roue solaire (20) forme le deuxième arbre (7), pouvant être bloqué avec le premier frein (C) et relié à la première course de travail (P) par le dispositif d'accouplement (F) et à la seconde course de travail (Q) par le dispositif d'accouplement (B), **en ce que** la seconde course de travail peut être reliée au deuxième arbre (7) par le dispositif d'accouplement (B) et au troisième arbre (8) par le dispositif d'accouplement (E), **en ce que** la nervure (19) est couplée à la couronne de train planétaire (22) et forme le quatrième arbre (9), relié de manière fixe à l'arbre récepteur (2).

2. Démultiplicateur à plusieurs étages selon la revendication 1, **caractérisé en ce que,** vus à partir du dispositif moteur, sont placés entre l'essieu monté en amont et l'essieu monté en aval, d'abord le frein (C), ensuite le dispositif d'accouplement (F) et enfin le dispositif d'accouplement (A).

3. Démultiplicateur à plusieurs étages selon la revendication 1, **caractérisé en ce que,** vus à partir du dispositif moteur, sont placés entre l'essieu monté en aval et le boîtier, d'abord le frein (D), ensuite le dispositif d'accouplement (E) et enfin le dispositif d'accouplement (B).

4. Démultiplicateur à plusieurs étages selon la revendication 1, **caractérisé en ce que**, vus à partir du dispositif moteur, sont placés entre le boîtier et l'essieu monté en aval, tout d'abord le dispositif d'accouplement (E) et ensuite le frein (D).

5. Démultiplicateur à plusieurs étages selon la revendication 1, **caractérisé en ce que**, vus à partir du dispositif moteur, sont placés entre l'essieu monté en aval et l'essieu monté en amont, tout d'abord le dispositif d'accouplement (C), ensuite le dispositif d'accouplement (B) et entre l'essieu monté en amont et le boîtier, tout d'abord le dispositif d'accouplement (A) et ensuite le dispositif d'accouplement (F).

6. Démultiplicateur à plusieurs étages selon le préambule de la revendication 1, **caractérisé en ce que** l'arbre moteur (1) est relié avec le troisième et le quatrième système d'accouplement (B, E) et la roue planétaire (10), **en ce que** la nervure (14) porte les pignons satellites intérieurs (11) s'engrenant avec la roue planétaire (10) et les pignons satellites extérieurs (12), **en ce que** la nervure (15) porte les pignons satellites extérieurs (12) s'engrenant avec les pignons satellites intérieurs (11) et la couronne de train planétaire (13), **en ce que** la couronne de train planétaire (13) est reliée de manière fixe avec une premier et un deuxième dispositif d'accouplement (A, F), **en ce que** les deux nervures (14, 15) sont couplées l'une à l'autre et reliées de manière fixe avec un premier frein (C) et avec le boîtier, **en ce que** la première course de travail (P) conduit au premier arbre (6) par le premier ensemble de pignons planétaires (3) et le premier dispositif d'accouplement (A) et au deuxième arbre (7) par le deuxième dispositif d'accouplement (F), **en ce que** la seconde course de travail (Q) conduit, en partant de l'arbre moteur (1) au deuxième arbre (7) par le troisième dispositif d'accouplement (B) et au troisième arbre moteur (8) par le quatrième dispositif d'accouplement (E), **en ce que** le premier arbre (6) peut être relié à la couronne de train planétaire (18) par le premier dispositif d'accouplement (A), **en ce que** la nervure (19) porte les pignons satellites (17) s'engrenant avec là couronne de train planétaire (18) et la roue solaire (16), **en ce que** la roue solaire (16) est couplée avec la roue solaire (20) et forme le deuxième arbre (7), **en ce que** la nervure (19) est couplée avec la couronne de train planétaire (22) et forme le quatrième arbre (9) relié de manière fixe avec l'arbre récepteur (2), **en ce que** la nervure (23) porte les pignons satellites (21) s'engrenant avec la couronne de train planétaire (22) et la roue solaire (20), **en ce que** la nervure (23) peut être bloquée par le second frein (D) et forme le troisième arbre (8).
